# EUROPEAN PATENT SPECIFICATION

(11) **EP 2 444 294 B1**
(45) Date of publication and mention of the grant of the patent: **11.04.2018**
(21) Application number: 11250202.6
(22) Date of filing: 22.02.2011
(51) Int. Cl.: B61D 29/00

(54) **Railway car equipped with LED lighting system, and method for controlling LED lighting system equipped in railway car**
Mit LED-Beleuchtungssystem ausgestatteter Eisenbahnwaggon und Verfahren zur Steuerung eines LED-Beleuchtungssystems, das in einen Eisenbahnwaggon eingebaut ist
Wagon de train équipé d'un système d'éclairage par LED et procédé de commande du système d'éclairage par LED dans un wagon de train

(30) Priority: 22.10.2010 JP 2010237751
(43) Date of publication of application: 25.04.2012
(73) Proprietor: Hitachi, Ltd., Chiyoda-ku Tokyo 100-8280 (JP)
(72) Inventor: Ishii, Isao, Chiyoda-ku, Tokyo 100-8220 (JP)
(74) Representative: Gill, Stephen Charles

(56) References cited:
- FR-A1- 2 921 603
- GB-A- 190 010 810
- JP-A- 2001 039 210
- JP-A- 2010 157 454
- US-A1- 2005 109 882

## Description

### BACKGROUND OF THE INVENTION

### Field of the Invention

The present invention relates to a railway car equipped with an LED lighting system, and a method for controlling the LED lighting system equipped in railway cars.

### Description of the Related Art

Conventionally, the mainstream of lightings in railway cars have used fluorescent lights. Fluorescent lights are composed of cylindrical fluorescent tubes (glass tubes) having fluorescent coating applied on the inner side thereof, electrodes disposed on both ends thereof, and a power supply for supplying power to the electrodes. Therefore, in order to dispose fluorescent lights on the ceiling of railway cars, fluorescent tubes and power supplies for the fluorescent tubes must also be installed.

Recently, as a part of the policy for promoting energy saving of railway cars and reducing environmental load, the application of lightings using LED elements (light emitting diodes that emit light when voltage is applied) having small consumption power and long lifetime have been considered.

Lightings using LED elements (hereinafter referred to as LED lightings) could not be immediately adopted as the main lightings of railway cars, since they had to overcome drawbacks such as insufficient illuminance. However, along with the recent advancement of technology of LED elements and LED color plates, the concerned drawback of insufficient illuminance was solved, and the technological level of LED elements were advanced so that the elements could be applied as main lightings of railway cars.

In general, when LED lightings are applied as main lightings of railway cars, a lamp body and a power supply of the LED lighting are disposed as one set, similar to the conventional method of installing main lightings adopting fluorescent lights. Actually, a single power supply is disposed on a single lamp body of LED lighting, so that one lamp body and one power supply are disposed as one set, wherein a total of approximately 24 sets of lamp bodies and power supplies are disposed on the ceiling of one railway car of a trainset.

FR 2921603 A1 discloses a transport vehicle including a lighting device comprising at least one light source fixed to the inside of a passenger compartment and a control unit connected to the light source. JP 2001039210 discloses a lighting control device which automatically switches on or off the light of an automobile.

### [Cited reference]

[Patent document 1] Japanese patent application laid-open publication No. 2010-157454

When alternating the main lights using the conventional fluorescent lights with the LED lights, it is desirable to reduce not only the consumption power related to the main lighting but also the number of steps for disposing the LED lighting system to the railway car. If it is possible to consolidate the number of power supplies for supplying power to the lamp bodies of the LED lighting, it may becomes possible to cut down the consumption power related to lighting. Further, if only the lamps of the LED lighting (LED elements) are to be attached to the ceiling of the railway car and the power supply thereof can be disposed at areas other than the ceiling, it becomes possible not only to reduce both the number of steps for disposing the power supply and the number of steps for disposing the wirings for supplying power to the power supply but also to enhance the freedom of design of arranging the lamps of the LED lighting on the wide ceiling area of the railway car.

When the railway car passes through a tunnel, the illuminance of the interior of the railway car may be temporarily dropped, or depending on the height of the sun, the amount of light entering through windows of the railway car is increased and the illuminance of the interior of the car may be temporarily increased. According to the conventional lighting (illuminance) control of fluorescent lights, the power supplies supplying power to the respective fluorescent tubes were turned on and off to control the number of lighted fluorescent lights, so that lighting control wirings had to be disposed between the lighting control unit and the power supplies attached to the fluorescent tubes, according to which the number of operation steps were increased when introducing lighting control. Furthermore, lighting control of fluorescent lights had drawbacks in that the response performance of fluorescent lights related to the switching on and off of the power supply was not high.

In contrast, in railway cars adopting LED lighting as main lighting, the power supplies for supplying power to the lamps of the LED lighting can be consolidated, so that compared to examples where fluorescent lights were used as main lighting, lighting control can be introduced by merely disposing a small number of light control wirings between the lighting control unit and the power supplies. Furthermore, lighting control can be introduced easily to LED lightings since LED lamps have better response performance (controllability) compared to fluorescent lights.

On the other hand, lamps of the LED lightings are composed of DC circuits due to the property of LED, and the luminance of the LED elements are controlled via voltage and current. Railway cars have various circuits disposed thereon, such as a high voltage circuit mainly supplying power to a main motor, a low voltage circuit for supplying power to service equipments such as air-conditioning units, transmission circuits for transmitting data to information terminals within the car, and signal circuits for maintenance facilities. Thus, the wirings connecting the lamps of the LED lighting and the power supplies are susceptible to radiation noise radiated from the various circuits mentioned above. For example, if the wiring voltage from the power supplies to the lamps of the LED lighting is of low voltage, such as 12 V or 24 V, the dropping of the wiring voltage due to the influence of radiation noises may cause the lamps of the LED lighting to flicker or the life thereof to be deteriorated.

Problems to be solved in the LED lighting system of a railway car include (1) realizing energy saving by consolidating the power supplies of the LED lightings, (2) saving power by performing light control within the railway car, (3) facilitating the maintenance operation of the power supplies, (4) performing lighting control of a trainset and individual lighting control of the respective cars when a trainset composed of multiple railway cars passes through a tunnel, and (5) taking measures against voltage drop and radiation noises from other devices, which becomes necessary since the consolidation of the power supplies may cause the wiring lengths between LED lighting devices and power supplies to be elongated.

### SUMMARY OF THE INVENTION

The present invention aims at solving the problems of the prior art by providing a railway car equipped with an LED lighting system and an LED lighting system equipped in a railway car, capable of (1) saving energy by consolidating the power supplies of the LED lighting, (2) saving power by performing light control within the railway car, (3) facilitatingmaintenance of the power supplies, (4) maintaining a desired illuminance via collective light control of the overall trainset formed of multiple railway cars and individual light control of the respective railway cars when the trainset passes through a tunnel, and (5) solving the problem of voltage drop of wirings between the LED lighting devices and the power supplies and improving the durability thereof against radiated noises.

The problems of the prior art can be solved by providing a railway car equipped with an LED lighting system according to claim 3. The above-mentioned problems can also be solved by providing a railway car equipped with an LED lighting system comprising a first power supply and a second power supply for supplying power to the LED lighting device disposed in an interior of the railway car, a trainset control unit for detecting a tunnel information and transmitting the tunnel information to the first power supply and the second power supply, and an illuminance sensor for monitoring an illuminance of the interior of the railway car, characterized in that the first power supply has connected thereto a plurality of first LED lighting devices connected in series, the illuminance sensor and the trainset control unit, the second power supply has connected thereto a plurality of second LED lighting devices connected in series and the trainset control unit, and the system further comprises a control line for transmitting an output of the illuminance sensor from the first power supply to the second power supply.

Furthermore, the prior art problems can be solved by providing a method for controlling an LED lighting system equipped in a railway car according to claim 1. Even further, the prior art problems can be solved by providing a method for controlling an LED lighting system equipped in a railway car comprising a first power supply for supplying power to the LED lighting device disposed in an interior of the railway car, a trainset control unit for detecting a tunnel information and transmitting the tunnel information to the first power supply, and an illuminance sensor for monitoring an illuminance of the interior of the railway car, characterized in that the first power supply has connected thereto a plurality of LED lighting devices connected in series, the illuminance sensor and the trainset control unit, the method comprising a step of detecting approximation of the railway car to a tunnel entrance via the trainset control unit, a step of transmitting a brightening command from the trainset control unit to the first power supply, a step of increasing a luminance of the LED lighting device via the first power supply, a step of detecting the railway car passing through a tunnel exit via the trainset control unit, a step of transmitting a dimming command from the trainset control unit to the first power supply, and a step of reducing the luminance of the LED lighting device via the first power supply.

The present invention provides an LED lighting system insusceptible to voltage variation of power supplies caused by the storage batteries and rectifiers and circumferential noise specific to railway cars, and capable of consolidating the power supplies. Lighting control and further energy saving effects can be expected by consolidating the power supplies.

Moreover, the LED lighting system for a railway car according to the present invention is expected to realize the following effects. The expected effects include (1) saving energy by consolidating the power supplies of the LED lightings, (2) saving power by performing light control of the interior of the railway car, (3) facilitating maintenance of the power supplies, (4) maintaining a desired illuminance via collective light control of the overall trainset formed of multiple railway cars and individual light control of the respective railway cars when the trainset passes through a tunnel, and (5) solving the problem of voltage drop of wirings between the LED lighting devices and the power supplies and improving the durability against radiated noises.

### BRIEF DESCRIPTION OF THE DRAWINGS

Fig. 1 is a frame format of a railway car, which is a one-car train equipped with an LED lighting system according to the present invention;
Fig. 2 is a circuit diagram of a power supply of the railway car equipped with the LED lighting system illustrated in Fig. 1;
Fig. 3 shows another circuit diagram of a power supply of the railway car equipped with the LED lighting system illustrated in Fig. 1; and
Fig. 4 is a frame format of a railway car, which is a trainset composed of multiple cars equipped with the LED lighting system of a railway car.

### DETAILED DESCRIPTION OF THE PREFERRED EMBODIMENTS

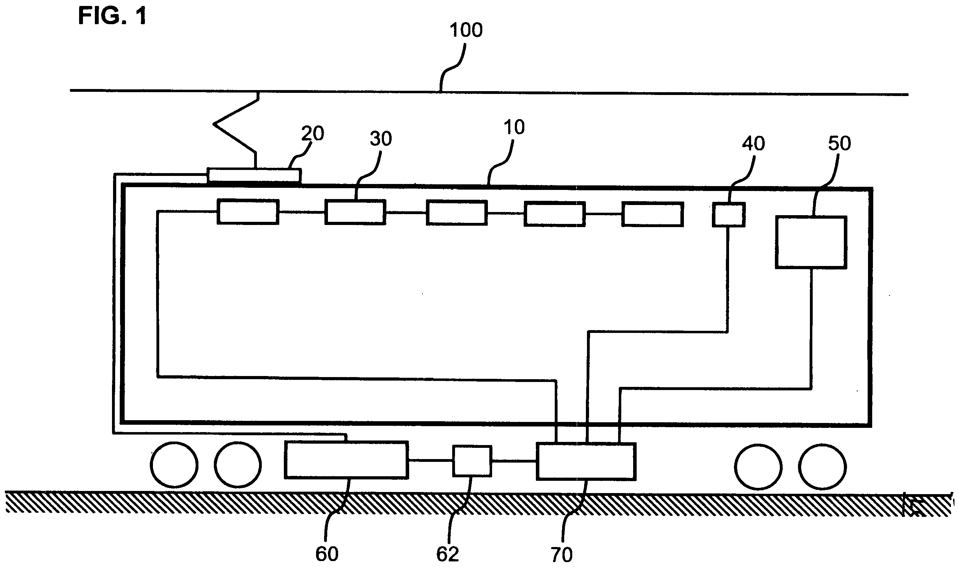

One preferred embodiment of the present invention will now be described with reference to Figs. 1 through 4.

Fig. 1 is a frame format of a railway car, which is a one-car train equipped with the LED lighting system of a railway car. A railway car 10 comprises a power collector 20 for collecting power from an overhead contact line 100 disposed on a rooftop, wherein the power collected via the power collector 20 is sent to an auxiliary power supply 60 disposed under the floor of the railway car 10. Generally, the auxiliary power supply 60 converts the high-voltage power collected from the overhead contact line 100 into power capable of being supplied to service equipments such as air-conditioning units (not shown) and lightings, and the converted power is supplied to these service equipments.

A storage battery or rectifier 62 and a first power supply 70 for supplying power to LED lighting devices 30 (LED lighting lamps) arranged on a ceiling within the railway car 10 are disposed under the floor of the railway car 10. To the first power supply 70 are connected the aforementioned LED lighting device 30, an illuminance sensor 40 for monitoring the illuminance of the interior of the railway car 10, and a trainset control unit 50 which handles train information such as the tunnel positions and lighting control commands for controlling the luminance of the LED lighting device 30 disposed on the railway car 10. Fig. 1 illustrates an example in which the first power supply 70 is disposed under the floor of the car (outside the car), but the first power supply 70 can be disposed in the interior of the railway car 10.

### [Embodiment 1]

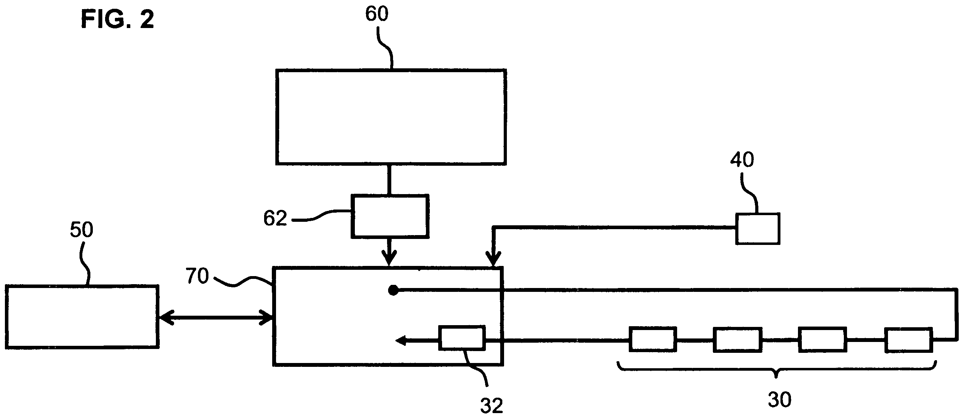

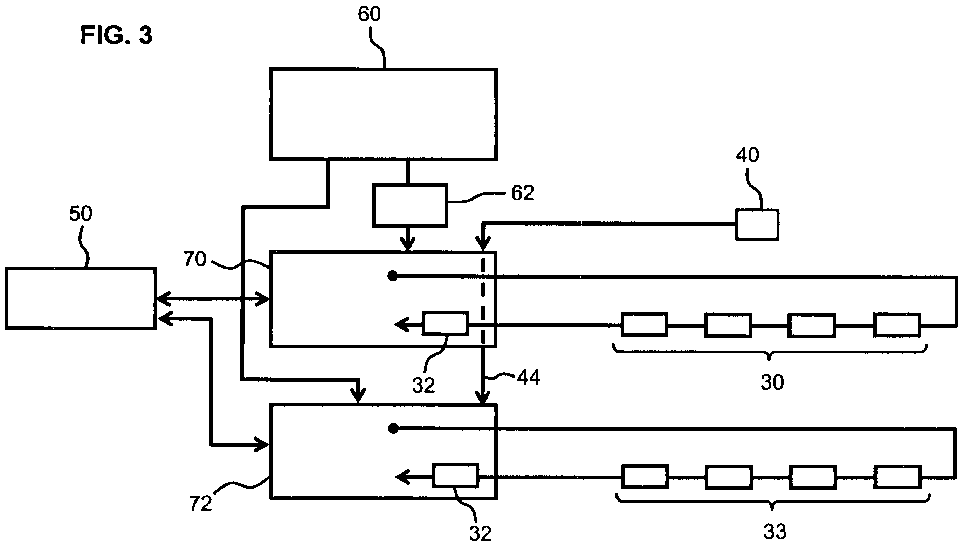

Fig. 2 is a circuit diagram of the power supply of the LED lighting system of one-car train equipped with the LED lighting system illustrated in Fig. 1. In Japan, lighting devices in railway cars are required to operate during emergencies such as power failure using the power supplied from a storage battery or the like equipped in the railway car. Therefore, the railway car adopts a lighting system equipped with only a power supply operated via DC power taking into consideration the arrangement of an auxiliary power supply and the capacity of the storage battery or the rectifier (refer to Fig. 2) or a lighting system equipped with two types of power supplies, one operated via DC power and the other operated via an AC power supply (refer to Fig. 3).

The power supply circuit diagram shown in Fig. 2 illustrates an example of the power supply circuit of the lighting device operated via DC power. An auxiliary power supply 60 receiving the power from the overhead contact line 100 generates DC power, and supplies DC power via a storage battery or a rectifier 62 to a first power supply 70. To the first power supply 70 are connected a circuit having a plurality of first LED lighting devices 30 and a resistance 32 arranged in series, a circuit connected to an illuminance sensor 40, and a circuit connected to a trainset control unit 50. In other words, according to the circuit diagram of the power supply shown in Fig. 2, the first LED lighting devices 30 are lighted via power fed from the first power supply 70, the number of which is smaller than the number of the lighting devices 30.

Since the number of first power supplies 70 can be reduced according to the above-mentioned arrangement, the number of steps of the operation for wiring the auxiliary power supply 60 to the first power supply 7 0 and the number of steps of the maintenance operation can be reduced. Since the total number of first power supplies 70 can be reduced, not only the total sum of heat generation quantity from the first power supply 70 but also the heat generation from the lamps of the LED lighting can be reduced compared to the heat generation of fluorescent lights, the equipment load occupying the cooling performance of the air-conditioning unit can be reduced.

Further, the voltage supplied from the first power supply 70 to the first LED lighting device 30 is set high so as to suppress the flickering and the like caused by the influence of radiation noises from high voltage circuits, low voltage circuits, transmission circuits and signal circuits disposed in the railway car 10. If there are a sufficient number of first LED lighting devices 30 disposed on the ceiling and the output voltage of the first power supply 70 cannot be set to a level high enough so as to be insusceptible to radiation noise from the aforementioned circuits, a fixed resistance 32 is inserted according to need to achieve the predetermined voltage. As shown in Fig. 2, the fixed resistance 32 can be disposed within the first power supply 70.

The above-described arrangement enables to construct an LED lighting system for a railway car insusceptible to radiated noise generated from the various circuits disposed on the railway car 10, so that the flickering of first LED lighting devices 30 can be prevented. Further, only one line of circuit of first LED lighting devices 30 is connected to a single first power supply 70 in Fig. 2, but the number of first power supplies 70 and the number of circuits composed of first LED lighting devices 30 connected to the first power supply 70 can be more than one, in view of the specification of the power supply and the like.

The trainset control unit 50 outputs an all lights out control command (for example during deadhead or periodic inspection), an all lights-up command, a dimming command, a lighting control command or the like to the first power supply, and receives a power supply operation information and a light control information from the first power supply 70.

The trainset control unit 50 comprises in advance a track information on which the railway car 10 travels (such as the distances, tunnel positions and slow speed sections), wherein the current positional information of the railway car 10 is read for example from ground coils and the like disposed along the tracks, and the current positional information is compared with the track information to detect the approximation of a tunnel. The trainset control unit 50 transmits a lighting control command (brightening command) to the first power supply 70 based on the tunnel detection information.

The first power supply 70 having received the lighting control command performs lighting control to increase the luminance of the first LED lighting devices 30 by increasing the current of the circuit to which the first LED lighting devices 30 are connected or by increasing the time during which the lights are illuminated by varying the power distribution time at a high speed so that the first LED lighting devices 30 are not flickered (PWM control). The illuminance sensor 40 monitors the illuminance of the interior of the car, and transmits the illuminance information to the first power supply 70 (feedback). If the received illuminance information is smaller than the predetermined value (illuminance prior to passing the tunnel), the first power supply 70 increases the current supplied to the circuit on which the first LED lighting devices 30 are connected to increase the luminance of the first LED lighting devices 30 and enhance the illuminance of the interior of the car. If the illuminance of the interior of the car is greater than the predetermined value, a control is performed to lower the illuminance of the interior of the car.

According to the light control described above, the reduction of the amount of light entering the car through the windows of the railway car 10 while the car passes through a tunnel can be compensated by increasing the luminance of the first LED lighting devices 30, the illuminance of the interior of the car can be maintained at a desired level even when the railway car 10 passes through a tunnel. Figs. 1 and 2 illustrate an example in which a single illuminance sensor 40 is disposed on a ceiling of the railway car 10, but a plurality of illuminance sensors 40 can be disposed within the railway car, according to which the average value of output of the plurality of illuminance sensors disposed at various sections within the car is computed.

Even further, when the railway car 10 passes through a tunnel and travels in a lighting section, the trainset control unit 50 can detect the exit of the tunnel based on the track information and transmit a lighting control command (dimming command) from the trainset control unit 50 to the first power supply 70 to dim the lights to realize the illuminance of the interior of the car prior to entering the tunnel, or the first power supply 70 can dim the lights of the first LED lighting devices 30 based on the output from the illuminance sensor 40.

Further, the lighting control mentioned above is not restricted to the case where the railway car passes through a tunnel, and even when the railway car travels through a lighted section, the illuminance of the interior of the railway car 10 can be maintained at a desirable level by detecting the changes in interior illuminance caused by the change of outside environment of the railway car 10 at various times of the day such as in the morning, at noon, at dusk or at night or by the rapid change of weather and transmitting the detected illuminance information to the first power supply 70. Therefore, a desired illuminance level can be achieved in the railway car 10, according to which the services offered to passengers can be improved and the consumption power can be cut down since there is no need to maintain excessive illuminance.

### [Embodiment 2]

Fig. 3 illustrates another circuit diagram of a power supply for LED lighting of a one-car train quipped with the LED lighting system shown in Fig. 1. The components equivalent to those of embodiment 1 are denoted with the same reference numbers to omit detailed descriptions thereof, and only the arrangements characteristic to embodiment 2 are described in the following description.

The power supply circuit illustrated in Fig. 3 has a power supply circuit in which the lighting device is operated via AC power being provided in addition to the power supply circuit (refer to Fig. 2) in which the lighting device is operated via DC power. A second power supply 72 disposed on the power supply circuit and operated via AC power has connected thereto a circuit composed of a plurality of second LED lighting devices 33 arranged in series and a resistance 32, and receives supply of AC power from an auxiliary power supply 60.

The illuminance sensor 40 is connected to either a first power supply 70 or a second power supply 72, wherein a control line 44 is connected between the first power supply 70 and the second power supply 72 to supply power to the illuminance sensor 40 and to transmit output from the illuminance sensor 40.

According to the above-described arrangement, it becomes possible to omit the operation to lay down wires between the illuminance sensor 40 and one of the first power supply 70 or the second power supply 72. Furthermore, if the second power supply 72 is arranged close to the first power supply 70, the control line 44 connecting the two power supplies can be reduced in length and the number of operation steps related to laying down the control line can be reduced.

The railway car equipped with a power supply circuit for the LED lighting system illustrated in Fig. 3 has a smaller number of first power supply 70 and second power supply 72 compared to the prior art lighting system for fluorescent tubes, so that the wiring operation from the auxiliary power supply 60 to the first power supply 70 and the second power supply 72 can be realized by a small number of steps, and the number of steps of the maintenance operation related to the power supply can also be reduced.

Similar to the output voltage of the first power supply 70, the voltage output from the second power supply 72 to the second LED lighting device 33 is set high so as to be insusceptible to the radiation noise from the aforementioned high voltage circuits and the like. If there are a sufficient number of second LED lighting devices 33 disposed on the ceiling and the output voltage of the second power supply 72 cannot be set to a level high enough to be insusceptible to the radiation noise from the aforementioned circuits, a fixed resistance 32 is inserted according to need to achieve the predetermined voltage. The fixed resistance 32 canbe disposed within the second power supply 72. The fixed resistance 32 is illustrated in Fig. 3, but there is no need to provide the fixed resistance 32 if the output voltage of the second power supply 72 can be set high only via the multiple second LED lighting devices 33. This arrangement enables to construct an LED lighting system for a railway car insusceptible to radiation noises generated from the various circuits disposed on the railway car 10, so that the flickering of the second LED lighting devices 33 can be prevented.

When the railway car 10 passes through a tunnel, similar to embodiment 1, the first power supply 70 and the second power supply 72 having received the lighting control command generated via the trainset control unit 50 increases or reduces the luminance of the second LED lighting devices 33 to thereby maintain the illuminance of the interior of the railway car 10 to a desired level. An illuminance sensor 40 is disposed on either the first power supply 70 or the second power supply 72, but the illuminance information from the illuminance sensor 40 is shared by both power supplies 70 and 72 via the control line 44 connecting the two, so that both power supplies can cooperate to perform control to maintain a fixed illuminance.

The cooperative control of the first and second power supplies 70 and 72 can also be performed when the interior illuminance of the car is varied by the change of outside environment of the railway car 10 at various times of the day such as in the morning, at noon, at dusk or at night or by the rapid change of weather, so that the illuminance within the interior of the railway car 10 can be maintained to a fixed level. Therefore, the railway car 10 capable of obtaining a desired illuminance level can improve the services provided to the passengers and the consumption power can be cut down since excessive illuminance will not be maintained.

### [Embodiment 3]

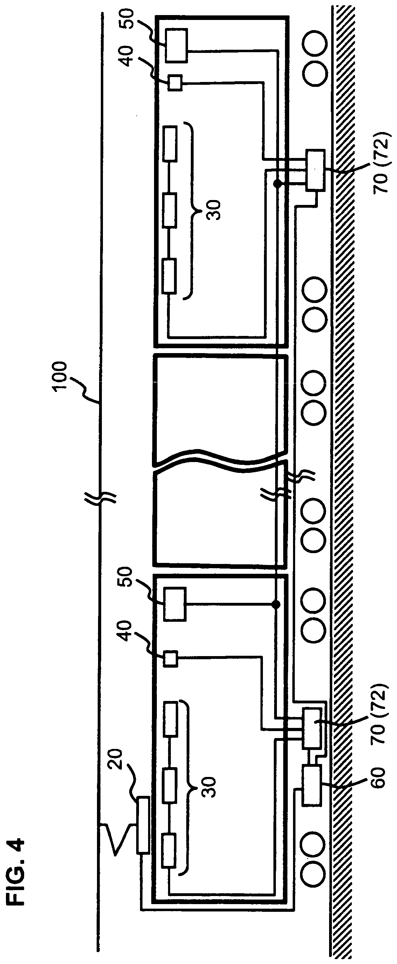

Fig. 4 is a frame format of a trainset composed of multiple cars equipped with the LED lighting system of a railway car. The components equivalent to those of embodiment 1 and embodiment 2 are denoted with the same reference numbers to omit detailed descriptions thereof, and only the arrangements characteristic to embodiment 3 will be described in the following description.

A trainset composed of railway cars 10 is equipped with a power collector 20 for collecting power from an overhead contact line, an auxiliary power supply 60 for generating power to be transmitted to service equipments such as lightings from the power collected from the overhead contact line 100, and a storage battery 62 (arranged similarly as in the embodiment illustrated in Fig. 1 but not shown in Fig. 4) storing power generated via the auxiliary power supply 60. The respective numbers of power collectors 20, auxiliary power supplies 60 and storage batteries 62 are determined for example based on the number of railway cars 10 constituting the trainset. The trainset control units 50 handling the track information such as the position of tunnels and the lighting control commands for controlling the luminance of the LED lighting devices disposed on the railway cars 10 are disposed on the two leading end cars of the trainset, which are connected to a transmission circuit disposed to cover the whole length of the trainset. The trainset control unit 50 mounted on the leading car facing the direction of travel of the train is selected by the driver via the operation of a driving equipment. The respective railway cars 10 are equipped with the power supply circuit for the LED lighting system taught in embodiment 1 or embodiment 2, or both the power supply circuits for the LED lighting system taught in embodiment 1 and embodiment 2.

When the trainset passes through a tunnel, the trainset control unit 50 compares the current position information with the track information, and detects the approximation of a tunnel. The trainset control unit 50 having detected a tunnel transmits a lighting control command (brightening command) to various power supplies via the transmission circuit. The respective power supplies having received the lighting control command increases the luminance (illuminance) of either the first LED lighting devices 30 or the second LED lighting devices 33 or both the first and second LED lighting devices 30 and 33 disposed on the respective railway cars 10. Since this lighting control of the whole trainset enables to increase the luminance (illuminance) of either the first LED lighting devices 30 or the second LED lighting devices 33 or both the first and second LED lighting devices 30 and 33 disposed on the respective railway cars 10 simultaneously as the train enters a tunnel, the illuminance of the railway cars 10 can be maintained at a desired level.

When the trainset exits a tunnel, either the trainset control unit 50 can detect the exiting of the trainset from the tunnel based on the positional information and the track information and transmit a lighting control command (dimming command) to the whole trainset to control the lighting of the overall trainset, or the lighting control can be performed in the respective cars 10 based on the illuminance information obtained via the illuminance sensor 40 disposed on each railway car 10.

## Claims

1. A method for controlling an LED lighting system equipped in a railway car (10) comprising:
a power supply (70) for supplying power to the LED lighting device (30) disposed in an interior of the railway car (10);
and
an illuminance sensor (40) for monitoring an illuminance of the interior of the railway car (10), **characterized in that**
the railway car further comprises
a trainset control unit (50) for detecting a tunnel information and transmitting the tunnel information to the power supply; and
the power supply (70) has connected thereto a plurality of LED lighting devices (30) connected in series, the illuminance sensor (40) and the trainset control unit (50);
wherein the method comprises a step of detecting the tunnel information via the trainset control unit (50);
a step of transmitting a lighting control command from the trainset control unit (50) to the power supply (70); and
a step of controlling a luminance of the LED lighting device (30) via the power supply (70).

2. The method for controlling an LED lighting system equipped in a railway car (10) according to claim 1, **characterized in** comprising:
a step of detecting approximation of the railway car to a tunnel entrance via the trainset control unit (50);
a step of transmitting a brightening command from the trainset control unit (50) to the power supply (70);
a step of increasing a luminance of the LED lighting device (30) via the power supply (60);
a step of detecting the railway car (10) passing through a tunnel exit via the trainset control unit (50);
a step of transmitting a dimming command from the trainset control unit (50) to the power supply (70); and
a step of reducing the luminance of the LED lighting device via the power supply (70).

3. A railway car equipped with an LED lighting system comprising:
a power supply (70) for supplying power to the LED lighting device (30) disposed in an interior of the railway car (10); and
an illuminance sensor (40) for monitoring an illuminance of the interior of the railway car (10), **characterised in that** the railway car further comprises:
a trainset control unit (50) for detecting a tunnel information and transmitting the tunnel information to the power supply (70); and
the power supply (70) has connected thereto a plurality of LED lighting devices (30) connected in series, the illuminance sensor (40) and the trainset control unit (50).

4. The railway car equipped with an LED lighting system according to claim 3, **characterized in that**
the power supply includes a first power supply (70) operated via DC power and a second power supply (72) operated via AC power.

5. The railway car equipped with an LED lighting system according to claim 4, the second power supply (72) has connected thereto a plurality of second LED lighting devices (33) connected in series and the trainset control unit (50); and
a control line (44) is disposed for transmitting an output of the illuminance sensor from the first power supply (70) to the second power supply (72).

## Patentansprüche

1. Verfahren zum Steuern eines LED-Beleuchtungssystems, das in einem Schienenfahrzeug (10) vorgesehen ist, umfassend:
eine Leistungsversorgungsvorrichtung (70), um der in einem Inneren des Schienenfahrzeugs (10) angeordneten LED-Beleuchtungsvorrichtung (30) Leistung zuzuführen; und
einen Beleuchtungsstärkensensor (40) zum Überwachen einer Beleuchtungsstärke des Inneren des Schienenfahrzeugs (10), **dadurch gekennzeichnet, dass**
das Schienenfahrzeug ferner Folgendes umfasst:
eine Triebzugeinheitsteuerungseinheit (50) zum Detektieren einer Tunnelinformation und zum Senden der Tunnelinformation an die Leistungsversorgungsvorrichtung; und
wobei an die Leistungsversorgungsvorrichtung (70) eine Vielzahl von in Serie geschalteten LED-Beleuchtungsvorrichtungen (30), der Beleuchtungsstärkensensor (40) und die Triebzugeinheitsteuerungseinheit (50) angeschlossen sind;
worin das Verfahren einen Schritt des Detektierens der Tunnelinformation über die Triebzugeinheitsteuerungseinheit (50);
einen Schritt des Sendens eines Beleuchtungssteuerungsbefehls von der Triebzugeinheitsteuerungseinheit (50) an die Leistungsversorgungsvorrichtung (70); und
einen Schritt des Steuerns einer Leuchtdichte der LED-Beleuchtungsvorrichtung (30) über die Leistungsversorgungsvorrichtung (70) umfasst.

2. Verfahren zum Steuern eines in einem Schienenfahrzeug (10) vorgesehenen LED-Beleuchtungssystems gemäß Anspruch 1, **gekennzeichnet durch** Umfassen von Folgendem:
einen Schritt des Detektierens der Annäherung des Schienenfahrzeugs an einen Tunneleingang über die Triebzugeinheitsteuerungseinheit (50);
einen Schritt des Sendens eines Aufhellungsbefehls von der Triebzugeinheitsteuerungseinheit (50) an die Leistungsversorgungsvorrichtung (70);
einen Schritt des Erhöhens einer Leuchtdichte der LED-Beleuchtungsvorrichtung (30) über die Leistungsversorgungsvorrichtung (70);
einen Schritt des Detektierens des einen Tunnelausgang passierenden Schienenfahrzeugs (10) über die Triebzugeinheitsteuerungseinheit (50);
einen Schritt des Sendens eines Dimm-Befehls von der Triebzugeinheitsteuerungseinheit (50) an die Leistungsversorgungsvorrichtung (70); und
einen Schritt des Reduzierens der Leuchtdichte der LED-Beleuchtungsvorrichtung über die Leistungsversorgungsvorrichtung (70).

3. Mit einem LED-Beleuchtungssystem ausgestattetes Schienenfahrzeug, umfassend:
eine Leistungsversorgungsvorrichtung (70), um der LED-Beleuchtungsvorrichtung (30), die in einem Inneren des Schienenfahrzeugs (10) angeordnet ist, Leistung zuzuführen; und
einen Beleuchtungsstärkensensor (40) zum Überwachen einer Beleuchtungsstärke des Inneren des Schienenfahrzeugs (10), **dadurch gekennzeichnet, dass** das Schienenfahrzeug ferner Folgendes umfasst:
eine Triebzugeinheitsteuerungseinheit (50) zum Detektieren einer Tunnelinformation und zum Senden der Tunnelinformation an die Leistungsversorgungsvorrichtung (70); und
wobei an die Leistungsversorgungsvorrichtung (70) eine Vielzahl von in Serie geschalteten LED-Beleuchtungsvorrichtungen (30), der Beleuchtungsstärkensensor (40) und die Triebzugeinheitsteuerungseinheit (50) angeschlossen sind.

4. Mit einem LED-Beleuchtungssystem ausgestattetes Schienenfahrzeug gemäß Anspruch 3, **dadurch gekennzeichnet, dass**
die Leistungsversorgungsvorrichtung eine erste Leistungsversorgungsvorrichtung (70), die über Gleichstromleistung betrieben wird, und eine zweite Leistungsversorgungsvorrichtung (72), die über Wechselstromleistung betrieben wird, umfasst.

5. Mit einem LED-Beleuchtungssystem ausgestattetes Schienenfahrzeug gemäß Anspruch 4,
**dadurch gekennzeichnet, dass**
an die zweite Leistungsversorgungsvorrichtung (72) eine Vielzahl von in Serie geschalteten, zweiten LED-Beleuchtungsvorrichtungen (33) und die Triebzugeinheitsteuerungseinheit (50) angeschlossen sind; und
eine Steuerleitung (44) zum Senden einer Ausgabe des Beleuchtungsstärkensensors von der ersten Leistungsversorgungsvorrichtung (70) an die zweite Leistungsversorgungsvorrichtung (72) angeordnet ist.

## Revendications

1. Procédé pour commander un système d'éclairage à DEL (diode électroluminescente) aménagé dans un véhicule ferroviaire (10) comprenant :
une alimentation électrique (70) pour fournir de l'énergie au dispositif d'éclairage à DEL (30) disposée dans un intérieur du véhicule ferroviaire (10) ; et
un capteur d'éclairage (40) pour surveiller un éclairage de l'intérieur du véhicule ferroviaire (10), **caractérisé en ce que** le véhicule ferroviaire comprend en outre
une unité de commande de rame (50) pour détecter des informations de tunnel et transmettre les informations de tunnel jusqu'à l'alimentation électrique ; et
l'alimentation électrique (70) a, connectés à celle-ci, une pluralité de dispositifs d'éclairage à DEL (30) connectés en série, le capteur d'éclairage (40) et l'unité de commande de rame (50) ;
dans lequel le procédé comprend une étape de détection des informations de tunnel via l'unité de commande de rame (50) ;
une étape de transmission d'une instruction de commande d'éclairage de l'unité de commande de rame (50) jusqu'à l'alimentation électrique (70) ; et
une étape de commande d'une luminance du dispositif d'éclairage à DEL (30) via l'alimentation électrique (70).

2. Procédé pour commander un système d'éclairage à DEL aménagé dans un véhicule ferroviaire (10) selon la revendication 1, **caractérisé en ce qu'**il comprend :
une étape de détection du véhicule ferroviaire approchant d'une entrée de tunnel via l'unité de commande de rame (50) ;
une étape de transmission d'une instruction d'éclaircissement de l'unité de commande de rame (50) jusqu'à l'alimentation électrique (70) ; et
une étape d'augmentation de la luminance du dispositif d'éclairage à DEL (30) via l'alimentation électrique (60) ;
une étape de détection du véhicule ferroviaire (10) passant à travers une sortie de tunnel via l'unité de commande de rame (50) ;
une étape de transmission d'une instruction d'obscurcissement depuis l'unité de commande de rame (50) jusqu'à l'alimentation électrique (70) ; et
une étape de réduction de la luminance du dispositif d'éclairage à DEL via l'alimentation électrique (70).

3. Véhicule ferroviaire équipé d'un système d'éclairage à DEL, comprenant :
une alimentation électrique (70) pour fournir de l'énergie au dispositif d'éclairage à DEL (30) disposée dans un intérieur du véhicule ferroviaire (10) ; et
un capteur d'éclairage (40) pour surveiller l'éclairage de l'intérieur du véhicule ferroviaire (10), **caractérisé en ce que** le véhicule ferroviaire comprend en outre :
une unité de commande de rame (50) pour détecter des informations de tunnel et transmettre les informations de tunnel jusqu'à l'alimentation électrique (70) ; et
l'alimentation électrique (70) a, connectés à celle-ci, une pluralité de dispositifs d'éclairage à DEL (30) connectés en série, le capteur d'éclairage (40) et l'unité de commande de rame (50).

4. Véhicule ferroviaire équipé d'un système d'éclairage à DEL selon la revendication 3, **caractérisé en ce que**
l'alimentation électrique comprend une première alimentation électrique (70) fonctionnant par une alimentation en courant continu (CC) et une seconde alimentation électrique (72) fonctionnant par une alimentation en courant alternatif (CA).

5. Véhicule ferroviaire équipé d'un système d'éclairage à DEL selon la revendication 4, **caractérisé en ce que**
la seconde alimentation électrique (72) a, connectés à celle-ci, une pluralité de dispositifs d'éclairage à DEL (33) connectés en série et l'unité de commande de rame (50) ; et
une ligne de commande (44) est disposée pour transmettre une sortie du capteur d'éclairage de la première alimentation électrique (70) à la seconde alimentation électrique (72).
